# EUROPÄISCHE PATENTSCHRIFT

(11) **EP 3 670 906 B1**
(45) Veröffentlichungstag und Bekanntmachung des Hinweises auf die Patenterteilung: **02.03.2022**
(21) Anmeldenummer: 19210957.7
(22) Anmeldetag: 22.11.2019
(51) Int. Cl.: F04B 53/10, F04B 13/00, F04B 53/06, F04B 43/02

(54) **DOSIERPUMPE MIT INTEGRIERTEM ÜBERSTRÖMVENTIL UND VENTILEINSATZ FÜR EINE DOSIERPUMPE**
METERING PUMP WITH INTEGRATED OVERFLOW VALVE AND VALVE INSERT FOR A METERING PUMP
POMPE DE DOSAGE POURVUE DE SOUPAPE DE DÉCHARGE INTÉGRÉE ET INSERT DE SOUPAPE POUR UNE POMPE DE DOSAGE

(30) Priorität: 20.12.2018 DE 102018133214; 25.07.2019 DE 202019104111 U
(43) Veröffentlichungstag der Anmeldung: 24.06.2020
(60) Teilanmeldung: 20187961.6
(73) Patentinhaber: Lutz-Jesco GmbH, 30900 Wedemark (DE)
(72) Erfinder: Roth, Steffen, 97904 Dorfprozelten (DE); Militzer, Peter Bernard, 68800 Roderen (FR)
(74) Vertreter: Christ, Niko

(56) Entgegenhaltungen:
- EP-A1- 0 260 464
- WO-A1-95/13473
- CH-A- 457 146
- DE-A1- 4 219 664
- DE-A1- 19 726 698
- DE-C1- 3 827 489
- DE-C1- 19 712 096

## Beschreibung

Die vorliegende Erfindung betrifft einen Ventileinsatz für eine Dosierpumpe. Derartige Dosierpumpen stellen bereits seit Langem gängigen Stand der Technik dar. Sie werden immer dann bevorzugt eingesetzt, wenn aggressive Chemikalien leckagefrei dosiert werden sollen, eine hohe Wiederholgenauigkeit gefordert ist und gegen hohe Drücke gepumpt werden muss. Aufgrund der Aggressivität der Chemikalien, die unter hohem Druck dosiert werden, wird immer häufiger geeignetes Sicherheitszubehör verlangt, um im System entstehende kritische Überdrücke zu vermeiden. Hierbei hat das Sicherheitszubehör die Aufgabe, entweder den Druck zu überwachen, oder diesen bei Erreichen eines Druckgrenzwerts zu reduzieren. Aus dem Dokument DE 197 12 096 C1 ist zum Beispiel eine Dosierpumpe bekannt, welche eine Entlüftungseinheit mit einem Rückschlagventil umfasst.

Die Drucküberwachung kann insbesondere durch den Einbau eines Drucksensors in den Dosierkopf, die Saugleitung, die Druckleitung oder direkt in den der Dosierpumpe nachgeschalteten Prozess erfolgen. Hierbei werden Sensoren und zusätzlich eine Auswerteelektronik benötigt. Die Auswerteelektronik kann in einem Pumpengehäuse mit aufgenommen sein oder mit einer Prozesssteuerung in einem entfernten Schaltschrank. In jedem Fall muss sie aber mit den Sensoren datenverbunden sein und die Pumpe in Abhängigkeit von den Sensorwerten steuern. Diese Art der Überwachung ist sehr kostspielig und erfordert einen hohen Montageaufwand.

Eine mechanische Druckbegrenzung hingegen kann mittels eines Überströmventils umgesetzt werden. Hierbei wird ein zusätzliches Ventil auf den Dosierkopf oder in die Druckleitung eingebaut. Über eine Stellschraube kann eine Feder im Inneren des Ventils vorgespannt, und mit dieser der Betriebsdruck und ein Druckgrenzwert eingestellt werden. Die Federkraft entspricht somit dem Öffnungsdruck.

Im Normalzustand strömt dann von der Dosierpumpe gefördertes Medium durch das Ventil. Steigt nun der Druck an dem Ventil, also in der Druckleitung oder dem Dosierkopf an, so öffnet eine Membran einen Überströmkanal, der das Medium zurück in einen Medienbehälter oder in einen separaten Auffangbehälter leitet. Fällt der Druck daraufhin wieder ab, schließt die Membran den Überströmkanal wieder und das Medium strömt weiter in Richtung Prozess. Diese Lösung sieht jedoch vor, dass in dem Dosierkopf oder bereits in der Druckleitung zunächst ein sehr großer Druck entsteht. Neben dem sich hierdurch einstellenden erhöhten Verschleiß benötigt die Anordnung eines zusätzlichen Armaturblocks mit dem genannten Überströmventil zusätzlichen Bauraum und zusätzliche Leitungen zu dem Armaturenblock und von diesem weg.

Vor diesem Hintergrund liegt der vorliegenden Erfindung die Aufgabe zu Grunde, eine Lösung anzugeben, bei welcher ein Überdruck in der Druckleitung vermieden und entstehende kritische Überdrücke direkt am oder im Dosierkopf abgebaut werden können.

Gelöst wird diese Aufgabe durch einen Ventileinsatz für eine Dosierpumpe gemäß den Merkmalen des unabhängigen Anspruchs 1. Eine sinnvolle Ausgestaltung eines solchen Ventileinsatzes kann dem abhängigen Anspruch entnommen werden.

Erfindungsgemäß ist es vorgesehen, dass einer Dosierpumpe im Bereich ihres Dosierkopfs, neben dem für die Funktion benötigten Saugventil und Druckventil ein Überströmventil zugeordnet ist, über das sich ein kritischer Überdruck im Dosierkopf abbauen kann. Im Fall des Erreichens eines oberen Druckgrenzwerts im Dosierkopf lösen Mittel zum Öffnen einer Überströmleitung aus und eröffnen einen Zugang zu dieser Überströmleitung, welche aus dem Dosierkopf hinausführt. Hierdurch sinkt im Anschluss an die Öffnung der Überströmleitung der Druck im Dosierkopf unterhalb des oberen Druckgrenzwerts und eine Beschädigung der Dosierpumpe kann hierdurch vermieden werden.

In einer Variante der Erfindung kann sich das Überströmventil konkret zwischen Saugventil und Druckventil befinden.

Dies ist deshalb besonders vorteilhaft, weil durch diese Anordnung der Druck direkt am Ort des Entstehens wieder abgesenkt werden kann, während bei dem bekannten Stand der Technik der Druck erst in dem separaten Armaturenblock abgebaut werden kann. Bei dem bekannten Stand der Technik verbleibt der Druck also im Dosierkopf und es kommt trotz der Entlastung in der Druckleitung bei den überhöhten Druckverhältnissen im Dosierkopf.

Die Überströmleitung ihrerseits kann auf der von dem Dosierkopf abgewandten Seite des vorzugsweise mit der Saugleitung verbunden oder identisch sein, welche den Dosierkopf speist, so dass das Medium den Förderkreislauf nicht erst verlässt. Alternativ kann die Überströmleitung aber auch mit einem Behälter verbunden sein, etwa einem Überlaufbehälter oder direkt zurück in den mit der Saugleitung verbundenen Medienbehälter führen.

Soweit die Überströmleitung mit der Saugleitung identisch ist, kann es von besonderem Vorteil sein, wenn das Saugventil sogar baueinheitlich mit dem Überströmventil gebildet ist. In einem solchen Fall kann das Saugventil sich einen Absperrkörper, vorzugsweise eine Kugel, mit dem Überströmventil teilen, so dass diese Kugel ihren Ventilsitz und damit die Sperrposition in beide Richtungen, also die Saugrichtung und die Druckrichtung, in eine Freigabeposition verlassen kann. In Druckrichtung kann die Kugel wie bei einem herkömmlichen Druckventil ausweichen und bei einem Unterdruck im Dosierkopf unter Freigabe der Durchlassöffnung Medium aus der Saugleitung in den Dosierkopf eintreten lassen. Steigt hingegen der Druck in der Druckleitung, und infolgedessen auch im Dosierkopf an, so wird die Kugel wieder in den Ventilsitz zurückkehren. In die Gegenrichtung ist die Kugel von einem Ausweichen aus ihrer Sperrposition durch eine Druckfeder gehindert. Steigt hingegen der Druck im Dosierkopf über einen Druckgrenzwert hinweg an, so erlaubt die Druckfeder ein Ausweichen der Kugel auch in Saugrichtung, wodurch wiederum Medium aus dem Dosierkopf zurück in die Saugleitung verbracht werden kann.

Es hat sich als besonders vorteilhaft erwiesen, wenn das Überströmventil in der unmittelbaren Umgebung mit dem Saugventil angeordnet wird. Beim Ausfördern von Medium aus dem Dosierkopf wird das Saugventil, beispielsweise in Form eines Kugelventils ohnehin geschlossen, so dass im Zuge dieser Rücksetzbewegung auch die Mechanik eines Überströmventils angeordnet werden kann. In diesem Fall ist das Überströmventil in Förderrichtung nach dem Saugventil anzuordnen, so dass es nach dem Schließen des Saugventils noch dem Druck in dem Dosierkopf ausgesetzt ist. Wird dann die Überströmleitung eröffnet, welche in einer dem Überströmventil benachbarten Gehäusewand mündet, so kann das überströmende Medium über die Überströmleitung aus dem Dosierkopf abgeleitet werden.

In dieser Konfiguration kann das Überströmventil ferner das Saugventil von dem Inneren des Dosierkopfes trennen, so dass folglich dem Überströmventil eine Durchlassöffnung zugeordnet sein muss, durch welche beim Ansaugen von Medium dieses Medium hindurchgefördert werden kann.

Die Überströmleitung ihrerseits ist auf der von dem Dosierkopf abgewandten Seite vorzugsweise mit der Saugleitung verbunden, welche den Dosierkopf speist, so dass das Medium den Förderkreislauf nicht erst verlässt. Alternativ kann die Überströmleitung aber auch mit einem Behälter verbunden sein, etwa einem Überlaufbehälter oder direkt zurück in den mit der Saugleitung verbundenen Medienbehälter.

Das Saugventil ist dem Dosierkopf in Form eines Ventileinsatzes als Ganzes, beispielsweise über eine Schraubverbindung, zugeordnet. Das Überströmventil ist diesem Ventileinsatz mit zugeordnet, so dass der Ventileinsatz sowohl das Saugventil als auch das mit diesem vorzugsweise verbundene Überströmventil aufnimmt. Hierdurch ist es möglich, das Überströmventil unproblematisch in bestehende Dosierpumpen nachzurüsten, ohne dass größere bauliche Veränderungen an der Dosierpumpe vorgenommen werden müssten.

Ein solcher angepasster Ventileinsatz mit einem Überströmventil mit sämtlichen vorstehend beschriebenen Merkmalen ist ebenfalls ausdrücklich Gegenstand der vorliegenden Erfindung.

Die vorstehend beschriebene Erfindung wird im Folgenden anhand eines Ausführungsbeispiels näher erläutert.

Es zeigen
- Figur 1: die Saugseite des Dosierkopfs einer Dosierpumpe mit einem Saugventil gemäß dem bekannten Stand der Technik in einer Querschnittsdarstellung,
- Figur 2: die Saugseite des Dosierkopfs einer erfindungsgemäßen Dosierpumpe mit einem Ventileinsatz mit Überströmventil in einer Querschnittsdarstellung.

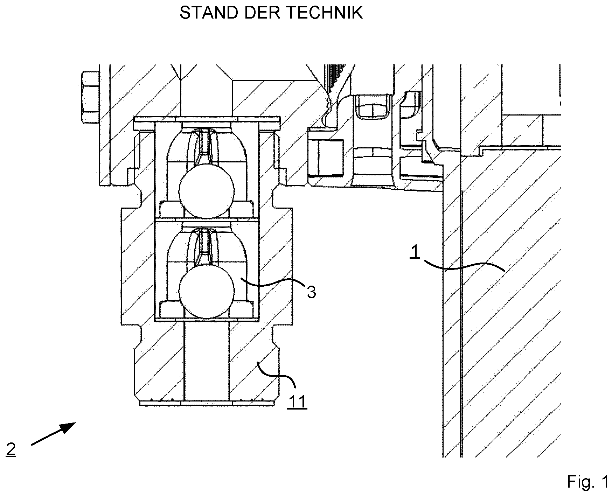

Figur 1 zeigt einen Dosierkopf 2 einer Dosierpumpe 1 wie sie im Stand der Technik bekannt sind. Gezeigt ist ein Detail der Saugseite des Dosierkopfs 2, welche einen Ventileinsatz 11 aufweist, der dem Dosierkopf 2 über eine Schraubverbindung anverbunden ist. Über eine hier nicht dargestellte Saugleitung wird Medium aus einem Medienbehälter mithilfe einer Membran in den Dosierkopf 2 eingesaugt, wobei der Ventileinsatz 11 hier ein als zweistufiges Kugelventil ausgeführtes Saugventil 3 aufweist. Der im Dosierkopf 2 herrschende Unterdruck, der durch die hier nicht gezeigte Membran erzeugt wird, öffnet die hintereinandergeschalteten Kugelventile und lässt das angesaugte Medium in den Dosierkopf 2 einströmen. Sodann wird die Membran nach Erreichen einer Endlage den Druck im Dosierkopf 2 wieder erhöhen, wodurch die Kugelventile schließen und das Medium über ein druckseitig angeordnetes, analoges aber in umgekehrter Richtung angeordnetes Druckventil ausgefördert wird. Wird der Druck in der Druckleitung zu groß, so wird dann ein dort gegebenenfalls eingesetztes Überströmventil auslösen und für eine Absenkung des Druckes in der Druckleitung sorgen. In dem Dosierkopf 2 hingegen bleibt ein zu hoher Druck in einem solchen Fall bestehen.

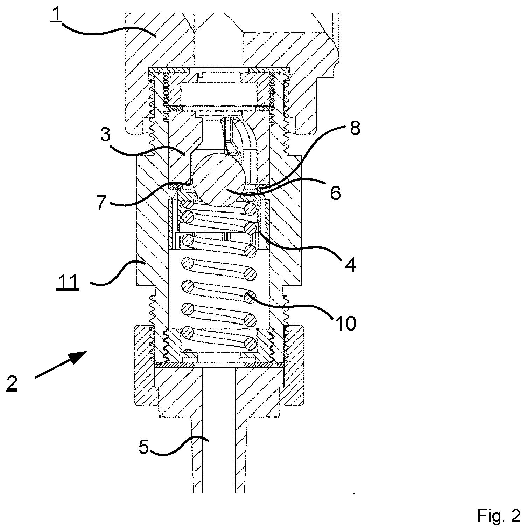

Figur 2 zeigt die erfindungsgemäße Lösung, die sich durch den eingesetzten Ventileinsatz 11 vom Stand der Technik abhebt. Der Ventileinsatz 11 weist hierbei ein Saugventil 3 und ein dem Saugventil 3 baueinheitlich zugeordnetes Überströmventil 4 auf, welche als gemeinsamen Absperrkörper eine Kugel 6 aufweisen. Diese Kugel 6 liegt in einer drucklosen Situation in ihrem Ventilsitz 8 und versperrt damit die Durchlassöffnung 7. Im Betrieb der Dosierpumpe 1 wird bei einem abfallenden Druck im Dosierkopf 2 die Kugel in Druckrichtung aus dem Ventilsitz 8 in eine Freigabeposition herausbewegt und Medium aufgrund des entstehenden Unterdrucks im Dosierkopf 2 in diesen hineingesaugt. Steigt der Druck im Normalbetrieb wieder an, so rückt die Kugel 6 wieder zurück in den Ventilsitz 8. Aufgrund einer Druckfeder 10 verlässt sie den Ventilsitz 8 nicht in Saugrichtung, sondern wird vielmehr in der Sperrposition gehalten.

Steigt hingegen der Druck in der Druckleitung, und infolgedessen auch im Dosierkopf 2 weiter an, so wird bei Erreichen und Überschreiten eines Druckgrenzwerts die Kugel 6 mit einem Druck gegen die Druckfeder 10 gedrückt, die für ein Ausweichen in Saugrichtung, also auf die Saugleitung zu, sorgt. Medium aus dem Dosierkopf 2 kann durch die hierdurch wieder freigewordene Durchlassöffnung in die Saugleitung ausströmen, so dass ein zu hoher Druck in dem Dosierkopf 2 verhindert werden kann.

Vorstehend beschrieben ist somit ein Ventilsitz für eine Dosierpumpe, bei welcher ein Überdruck in der Druckleitung vermieden und entstehende kritische Überdrücke direkt am oder im Dosierkopf abgebaut werden können. Dies erfolgt durch ein dem Saugventil direkt vor- oder nachgeschaltetes Überströmventil, welches bei Erreichen eines Druckgrenzwerts Medium direkt aus dem Dosierkopf herausleitet und den Druck hierdurch unmittelbar wieder unter den Druckgrenzwert absenkt.

### BEZUGSZEICHENLISTE

- 1: Dosierpumpe
- 2: Dosierkopf
- 3: Saugventil
- 4: Überströmventil
- 5: Überströmleitung
- 6: Kugel
- 7: Durchlassöffnung
- 8: Ventilsitz
- 10: Druckfeder
- 11: Ventileinsatz

## Patentansprüche

1. Ventileinsatz für eine Dosierpumpe, umfassend ein Saugventil (3) und ein diesem in Förderrichtung unmittelbar vor- oder nachgeschaltetes, Überströmventil (4), wobei das Saugventil (3) baueinheitlich mit dem Überströmventil (4) gebildet ist, indem eine Kugel (6) als gemeinsamer Absperrkörper sowohl in Druckrichtung als auch in Saugrichtung aus ihrem Ventilsitz (8) beweglich ist.

2. Ventileinsatz gemäß Anspruch 1, **dadurch gekennzeichnet, dass** die Kugel (6) nur gegen die Kraft einer Druckfeder (10) in Saugrichtung aus ihrem Ventilsitz (8) beweglich ist, sobald der Innendruck des Dosierkopfes (2) einen Druckgrenzwert übersteigt.

## Claims

1. Valve insert for a metering pump, comprising a suction valve (3) and an overflow valve (4) immediately upstream or downstream of said suction valve in the conveying direction, wherein the suction valve (3) is formed integrally with the overflow valve (4), a ball (6) being movable, as common shut-off body, out of its valve seat (8) both in the pressure direction and in the suction direction.

2. Valve insert according to claim 1, **characterized in that** the ball (6) can only be moved out of its valve seat (8) in the suction direction counter to the force of a compression spring (10) once the internal pressure of the metering head (2) exceeds a pressure limit value.

## Revendications

1. Insert de soupape destiné à une pompe doseuse, comprenant une soupape d'aspiration (3) et une soupape de décharge (4) immédiatement en amont ou en aval de celle-ci dans le sens de transport, la soupape d'aspiration (3) étant formée d'un seul tenant avec la soupape de décharge (4) par une bille (6), laquelle, en tant que corps d'obturation commun, peut être retirée de son siège de soupape (8) aussi bien dans le sens de la pression que dans le sens de l'aspiration.

2. Insert de soupape selon la revendication 1, **caractérisé en ce que** la bille (6) peut seulement être retirée de son siège de soupape (8) dans le sens d'aspiration contre la force d'un ressort de pression (10) lorsque la pression interne de la tête doseuse (2) dépasse une valeur limite de pression.
